# EUROPÄISCHE PATENTSCHRIFT

(11) **EP 1 899 103 B1**
(45) Veröffentlichungstag und Bekanntmachung des Hinweises auf die Patenterteilung: **20.10.2010**
(21) Anmeldenummer: 07722027.5
(22) Anmeldetag: 14.03.2007
(51) Int. Cl.: B23K 13/01, B23K 15/00, F01D 5/30

(54) **VERFAHREN ZUM INDUKTIVEN HOCHFREQUENZPRESSSCHWEISSVERBINDEN VON METALLISCHEN BAUELEMENTEN UNTER VERWENDUNG MINDESTENS ZWEIER UNTERSCHIEDLICHEN FREQUENZEN**
METHOD FOR THE INDUCTIVE HIGH-FREQUENCY PRESSURE WELDING OF METALLIC STRUCTURAL ELEMENTS USING AT LEAST TWO DIFFERENT FREQUENCIES
PROCÉDÉ DE SOUDAGE INDUCTIF PAR PRESSION À HAUTE FRÉQUENCE POUR RELIER DES ÉLÉMENTS DE CONSTRUCTION MÉTALLIQUES AU MOYEN D'AU MOINS DEUX FRÉQUENCES DIFFÉRENTES

(30) Priorität: 20.03.2006 DE 102006012661
(43) Veröffentlichungstag der Anmeldung: 19.03.2008
(73) Patentinhaber: MTU Aero Engines GmbH, 80995 München (DE)
(72) Erfinder: HANRIEDER, Herbert, 85411 Hohenkammer (DE); GINDORF, Alexander, 85247 Schwabhausen (DE)
(86) Internationale Anmeldenummer: PCT/DE2007/000454
(87) Internationale Veröffentlichungsnummer: WO 2007/110037

(56) Entgegenhaltungen:
- DE-A1- 10 206 447
- DE-A1- 19 858 702
- JP-A- 2005 111 502
- US-A- 4 300 031
- US-A- 4 584 453
- US-A1- 2001 045 426
- US-B1- 6 348 838

## Beschreibung

Die vorliegende Erfindung betrifft ein Verfahren zum Verbinden von metallischen Bauelementen, insbesondere von Bauelementen einer Gasturbine gemäß dem Oberbegriff des Anspruchs 1 (siehe, z.B., DE 198 58 702 A1).

Aus dem Stand der Technik sind velschiedene Verfahren zum Verbinden von metallischen Bauelementen mittels induktivem Hochfrequenzpressschweißens bekannt. So beschreibt die DE 198 58 702 A1 ein Verfahren zum Verbinden von Schaufelteilen einer Gasturbine, wobei ein Schaufelblattabschnitt und wenigstens ein weiteres Schaufelteil bereitgestellt werden. Dabei werden entsprechende Verbindungsflächen dieser Elemente im Wesentlichen fluchtend beabstandet zueinander positioniert und anschließend durch Erregen eines Induktors mit hochfrequentem Strom und durch Zusammenfahren unter Berührung ihrer Verbindungsflächen miteinander verschweißt. Dabei wird der Induktor mit einer konstanten Frequenz, die im Allgemeinen über 0,75 MHz liegt, erregt. Die Frequenz wird zudem in Abhängigkeit von der Geometrie der Verbindungsflächen gewählt. Bei dem induktiven Hochfrequenzpressschweißen ist die genügend große und homogene Erwärmung der beiden Schweißpartner für die Qualität der Fügestelle von entscheidender Bedeutung. Nachteilig an den bekannten Verfahren ist jedoch, dass damit nur Bauelemente mit Querschnitten kleiner als 200 mm² miteinander verschweißt werden können, da bei größeren Bauteilquerschnitten keine genügend große Erwärmung der zentralen bzw. mittleren Querschnittsbereiche und damit keine homogene Erwärmung der Fügestellen erfolgt.

Es ist daher Aufgabe der vorliegenden Erfindung ein gattungsgemäßes Verfahren zum Verbinden von metallischen Bauelementen bereitzustellen, bei dem eine sichere und dauerhafte Verbindung von Bauelementen mit größeren Querschnitten gewährleistet ist.

Gelöst werden diese Aufgaben durch ein Verfahren gemäß den Merkmalen des Anspruchs 1.

Zur Klarstellung sei hier ausdrücklich erwähnt, dass die Bezeichnung induktives Hochfrequenzpressschweißen das Verfahren bzw. das Bauteil im vorliegenden Fall nicht auf einen bestimmten Frequenzbereich festlegt. Vielmehr finden Frequenzen im niederen kHz-Bereich bis hin zum hohen MHz-Bereich Anwendung, so dass auch die neue Bezeichnung induktives Pressschweißen (IPS) eingeführt werden könnte.

Vorteilhafte Ausgestaltungen der Erfindung sind in den jeweiligen Unteransprüchen beschrieben.

Ein erfindungsgemäßes Verfahren zum Verbinden von metallischen Bauelementen, insbesondere von einer Gasturbine, verwendet zum Verbinden entsprechender Verbindungsflächen der Bauelemente ein induktives Hochfrequenzpressschweißen unter Erwärmung von mindestens einer Verbindungsfläche. Während des Vorgangs des induktiven Hochfrequenzpressschweißens werden zur Erwärmung der mindestens einen Verbindungsfläche mindestens zwei durch mindestens einen Induktor induzierte unterschiedliche Frequenzen verwendet. Durch die Verwendung von mindestens zwei unterschiedlichen Frequenzen ist eine optimale Durchwärmung der gesamten Verbindungsfläche bzw. des gesamten Fügequerschnitts bei größeren Querschnitten, insbesondere ab etwa 200 mm², sichergestellt. Damit ist wiederum eine sichere und dauerhafte Verbindung zwischen den einzelnen Bauelementen gewährleistet. Dabei werden gemäß der Erfindung die Randbereiche der Verbindungsfläche mit einer höheren und die innen liegenden Bereiche der Verbindungsfläche mit einer niedrigeren Frequenz erwärmt. Die Frequenzen werden dabei in Abhängigkeit der Beschaffenheit und Geometrie der Verbindungsflächen gewählt. Zudem ist es durch das erfindungsgemäße Verfahren möglich, Bauelemente mit deutlich unterschiedlichen Geometrien der Verbindungsflächen miteinander sicher und dauerhaft zu verbinden, da eine homogene und gleichzeitige Erwärmung der miteinander zu verbindenden Verbindungsflächen gewährleistet ist. Die gleichzeitige und homogene Erwärmung sorgt zudem dafür, dass es zu einer gleichmäßigen Aufstauchung des Fügebereichs kommt, so dass eine fehlerfreie Schweißverbindung erreicht werden kann. Die verwendeten unterschiedlichen Frequenzen werden gemäß der Erfindung dabei durch einen Induktor induziert.

In dem erfindungsgemäßen Verfahren werden die niedrigere Frequenz aus einem Bereich zwischen 7 kHz bis 1,0 MHz und die höhere Frequenz aus einem Bereich zwischen 1,0 bis 2,5 MHz gewählt. Damit ist es zum Beispiel möglich, den dünnen Randbereich einer so genannten Bliskschaufel mit einer Frequenz von ungefähr 2 MHz und gleichzeitig den maximalen Querschnitt in der Mitte der Schaufel mit einer niedrigeren Frequenz im Bereich von 0,8 MHz zu erwärmen.

In dem erfindungsgemäßen Verfahren wirken die unterschiedlichen Frequenzen gleichzeitig auf die mindestens eine Verbindungsfläche ein. Die erfindungsgemäße Multifrequenztechnik kann damit auf unterschiedliche Beschaffenheiten und Geometrien der zu verbindenden metallischen Bauelemente abgestimmt werden. Dabei können das erste und das zweite Bauelement aus unterschiedlichen oder ähnlichen metallischen Werkstoffen bestehen. Auch Bauelemente aus ähnlichen metallischen Werkstoffen, die jedoch durch unterschiedliche Herstellungsverfahren hergestellt worden sind, können sicher und dauerhaft verbunden werden.

In einer vorteilhaften Ausgestaltung des erfindungsgemäßen Verfahrens ist das erste Bauelement eine Schaufel eines Rotors in einer Gasturbine und das zweite Bauelement ein Ring oder eine Scheibe des Rotors. Bei diesen Bauteilen handelt es sich um so genannte Blinks ("bladed ring") oder Blisks ("bladed disc") von Gasturbinentriebwerken.

## Patentansprüche

1. Verfahren zum Verbinden von metallischen Bauelementen, insbesondere von Bauelementen einer Gasturbine, wobei das Verbinden entsprechender Verbindungsflächen der Bauelemente mittels eines induktiven Hochfrequenzpressschweißens unter Erwärmung von mindestens einer Verbindungsfläche erfolgt, **dadurch gekennzeichnet, dass** zur Erwärmung der zumindest einen Verbindungsfläche mindestens zwei durch einen einzigen Induktor induzierte unterschiedliche Frequenzen gleichzeitig verwendet werden, wobei gleichzeitig Randbereiche der Verbindungsfläche mit einer höheren und innen liegende Bereiche der Verbindungsfläche mit einer niedrigeren Frequenz erwärmt werden und wobei die niedrigere Frequenz aus einem Bereich zwischen 7 kHz - 1,0 MHz und die höhere Frequenz aus einem Bereich zwischen 1,0 - 2,5 MHz gewählt wird.

2. Verfahren nach Anspruch 1, **dadurch gekennzeichnet, dass** die Frequenzen in Abhängigkeit der Beschaffenheit und Geometrie der Verbindungsflächen gewählt werden.

3. Verfahren nach einem der vorhergehenden Ansprüche, **dadurch gekennzeichnet, dass** das erste und das zweite Bauelement aus unterschiedlichen oder ähnlichen metallischen Werkstoffen bestehen.

4. Verfahren nach einem der vorhergehenden Ansprüche, **dadurch gekennzeichnet, dass** das erste Bauelement eine Schaufel eines Rotors in einer Gasturbine ist und das zweite Bauelement ein Ring oder eine Scheibe des Rotors ist.

## Claims

1. A method for connecting metallic components, in particular components of a gas turbine, wherein the connection of corresponding connecting faces of the components is effected by means of inductive highfrequency pressure welding with heating of at least one connecting face, **characterised in that** in order to heat the at least one connecting face at least two different frequencies that are induced by one single inductor are used at the same time, wherein at the same time edge regions of the connecting face are heated with a higher frequency and internal regions of the connecting face are heated with a lower frequency, and wherein the lower frequency is selected from a range between 7 kHz - 1.0 MHz and the higher frequency is selected from a range between 1.0 - 2.5 MHz.

2. A method according to claim 1, **characterised in that** the frequencies are selected as a function of the nature and geometry of the connecting faces.

3. A method according to one of the preceding claims, **characterised in that** the first and the second component are made of different or similar metallic materials.

4. A method according to one of the preceding claims, **characterised in that** the first component is a blade of a rotor in a gas turbine, and the second component is a ring or a disc of the rotor.

## Revendications

1. Procédé permettant de raccorder des composants métalliques, en particulier des composants d'une turbine à gaz, lie raccordement des surfaces de liaison correspondantes des composants étant effectué au moyen d'un procédé de soudage par pression inductif à haute fréquence, avec chauffage d'au moins une surface de liaison, **caractérisé en ce que**, pour le chauffage de la ou des surfaces de liaison, au moins deux fréquences différentes induites par un seul inducteur sont simultanément employées, les zones de bordure de la surface de liaison étant chauffées avec une fréquence supérieure et les zones intérieures de la surface de liaison chauffées simultanément avec une fréquence inférieure, la fréquence inférieure étant choisie dans une plage comprise entre 7 kHz et 1,0 MHz, et la fréquence supérieure dans une plage comprise entre 1,0 MHz et 2,5 MHz.

2. Procédé selon la revendication 1, **caractérisé en ce que** les fréquences sont choisies en fonction de la nature et de la géométrie des surfaces de liaison.

3. Procédé selon l'une des revendications précédentes, **caractérisé en ce que** le premier et le deuxième composant sont en matériaux métalliques différents ou similaires.

4. Procédé selon l'une des revendications précédentes, **caractérisé en ce que** le premier composant est une pale d'un rotor d'une turbine à gaz, et le deuxième composant une couronne ou un disque de rotor.
